# EUROPEAN PATENT APPLICATION

(11) **EP 1 445 438 A1**
(43) Date of publication of application: **11.08.2004**
(21) Application number: 04000907.8
(22) Date of filing: 16.01.2004
(51) Int. Cl.: F01N 3/023, F01N 9/00, F02D 41/02, F02D 41/40

(54) **Exhaust gas purifying system**

(30) Priority: 21.01.2003 JP 2003012277
(71) Applicant: ISUZU MOTORS LIMITED, Shinagawa-ku, Tokyo (JP)
(72) Inventor: Gabe, Masashi, Fujisawa-shi Kanagawa (JP); Tashiro, Yoshihisa, Fujisawa-shi Kanagawa (JP)
(74) Representative: Weber, Dieter, Dr.

(57) **Abstract**

An exhaust gas purifying system (1) having a continuous regeneration DPF (3) installed in the exhaust passage (2) of a diesel engine (E) provided with a glow plug (16) and a regeneration control means (5) for regenerating the continuous regeneration DPF (3), is constituted so that the regeneration control means (5) performs retarded injection or post-injection in the control of fuel injection into a cylinder (13) and heating the inside of the cylinder (13) by the glow plug (16) for regenerating the continuous regeneration DPF (3).

Thereby, when raising the temperature of exhaust gas in the regeneration of the continuous regeneration DPF (3), it is possible to prevent the generation of white fumes and misfire and to raise the exhaust gas temperature efficiently and substantially. Therefore, it is possible to prevent the temperature of a catalyst and a DPF from being abnormal high and to prevent the deterioration and the melt down of the catalyst.

## Description

### BACKGROUND OF THE INVENTION

The present invention relates to an exhaust gas purifying system for purifying the exhaust gas of an engine having a continuous regeneration diesel particulate filter (hereafter referred to as DPF) installed in a diesel engine provided with a glow plug.

Restriction of the quantity of particulate matter (hereafter referred to as PM) to be discharged from a diesel engine is being enhanced year by year together with NOx, CO, and HC. Therefore, it's getting more difficult to cope with the enhanced restriction by the improvement of the engine alone. Thus, a technique for reducing the quantity of PM to be discharged to the outside from the engine by collecting the PM using a filter referred to as a DPF is developed.

The DPF for directly collecting the PM includes a monolith honeycomb wall-flow-type filter made of ceramic and a fabric type filter using fibrous ceramic or metal. The exhaust gas purifying system using one of the above filters is installed in the middle of the exhaust passage of the engine as in the case of other exhaust gas purifying systems to purify the exhaust gas produced by the engine before it is discharged.

In the case of the DPF, when a filter collects PM, the exhaust pressure rises proportionally to the collected PM quantity. Therefore, it is necessary to remove the collected PM by burning it and regenerate the DPF. For regenerating the DPF, various types of methods have been proposed such as the electric heater heating type, burner heating type, and back washing type.

However, since these regeneration methods require energy from the outside to burn PM, the fuel efficiency tends to deteriorate, and the control of a regeneration operation is difficult. Furthermore, the system becomes large and complex because of the necessity of two DPF systems for alternately performing PM collection and PM combustion (DPF regeneration) and the like.

To solve the above problems, a technique to regenerate a DPF is proposed which lowers an oxidation temperature of PM by using an oxidation catalyst to oxidize PM by the heat energy of the exhaust gas from the engine without receiving energy from the outside. In this case, the technique is referred to as a continuous regeneration DPF system because the DPF is basically continuously regenerated. Because the system is a further simplified single DPF system, there is the advantage that regeneration control is also simplified.

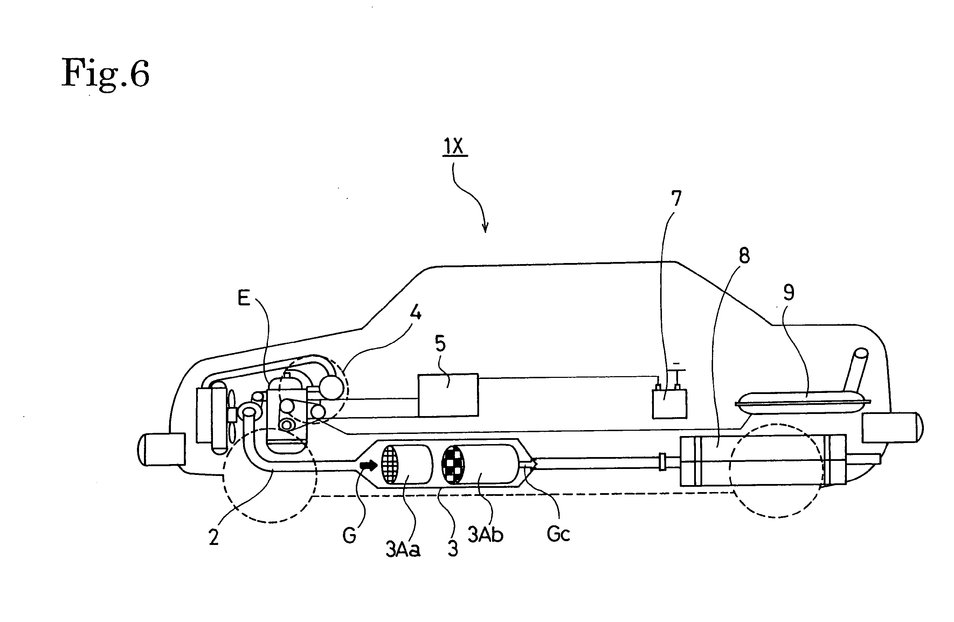

FIG. 6 shows an NO₂ regeneration DPF system 1X as an example. The NO₂ regeneration DPF system 1X is a system for oxidizing PM by NO₂ to regenerate a DPF. In the case of the system 1X, in order to oxidize NO (nitrogen monoxide) contained in the exhaust gas, an oxidation catalyst 3Aa is installed at the upstream side of a normal wall flow filter 3Ab. Therefore, most of the NOx contained in the exhaust gas becomes NO₂ after passing through the oxidation catalyst 3Aa. The PM collected in the filter 3Ab at the downstream side of the oxidation catalyst 3Aa is removed by oxidizing the PM to change into CO₂ (carbon dioxide). Because the NO₂ has an energy barrier smaller than that of O₂ (oxygen), it is possible to lower a PM oxidation temperature (DPF regeneration temperature). Therefore, it is possible to continuously burn PM by the energy in the exhaust gas without supplying energy from the outside.

In FIG. 6, a diesel engine is denoted by symbol E, an exhaust passage by 2, a fuel pump system by 4, an electronic control box by 5, a battery by 7, a muffler by 8 and a fuel tank by 9 respectively.

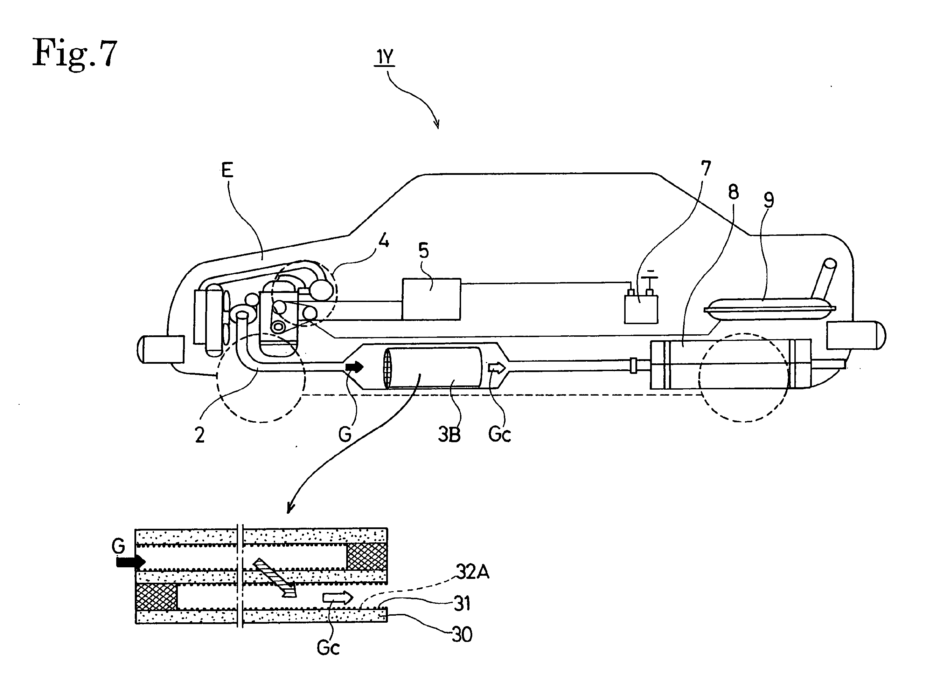

Moreover, FIG. 7 shows an improved system 1Y of a regeneration DPF system. The improved system 1Y is constituted by applying the porous catalyst coat layer 31 including the oxidation catalyst 32A to the porous wall surfaces 30 of a wall flow filter 3B. And, the system 1 Y is constituted so as to oxidize NO and to oxidize PM through NO₂ produced due to oxidation of NO, on the wall surfaces of the wall flow filter 3B. This constitution simplifies the system.

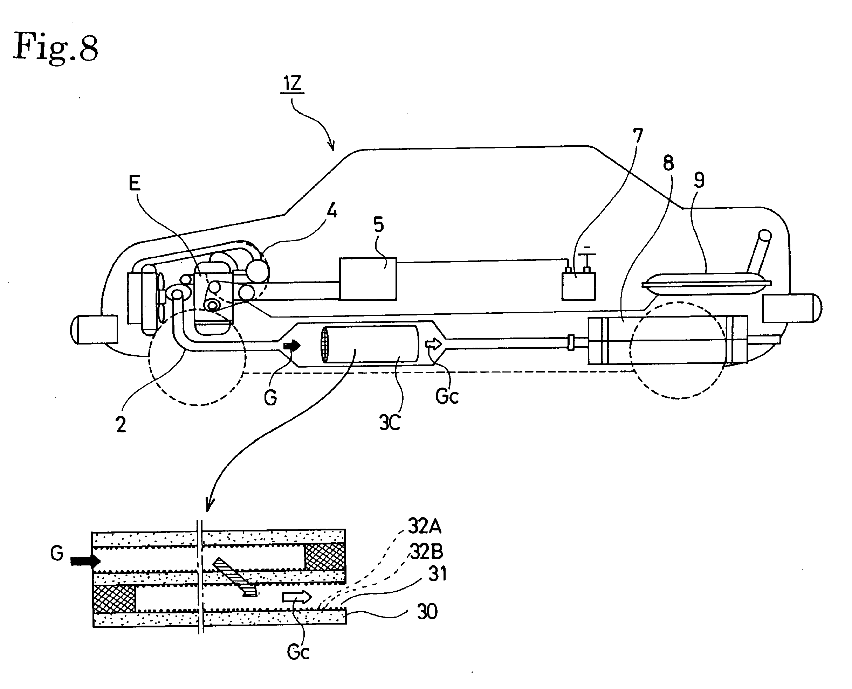

Furthermore, FIG. 8 shows a system 1Z of another type for continuous regeneration. In the case of this system 1Z, a porous catalyst coat layer 31 including the oxidation catalyst 32A and the PM oxidation catalyst 32B made of oxide or the like are applied to the porous wall surface 30 of a wall flow filter 3C. The PM accumulated on the filter 3C is burned at low temperature and continuously regenerated by these catalysts.

A DPF system provided with these catalysts is a system for continuously regenerating PM under the condition in which the PM oxidation start exhaust temperature is lower than that of a normal filter by the oxidation reaction of PM due to a catalyst and NO₂.

However, the PM oxidation start exhaust temperature is lowered, but even then the exhaust gas temperature of approx. 350°C is still required to regenerate a DPF. Therefore, because the exhaust gas temperature is insufficient under the engine operating conditions of idling or low load, the oxidation of PM and the regeneration of a DPF do not occur.

Therefore, when the engine operating conditions of idling or low load is continued, the exhaust pressure of the DPF becomes high because the PM cannot be oxidized even if the PM has accumulated in the DPF. Thus, the fuel efficiency deteriorates and troubles such as engine stop may occur.

Then, in the continuous regeneration DPF systems, the quantity of the PM accumulated in the filter is calculated in accordance with the engine operating condition or estimated in accordance with the filter pressure loss. A DPF regeneration prerequisite is set in accordance with the quantity of the accumulated PM. Moreover, the DPF regeneration control for forcibly burning the accumulated PM and removing the PM is performed when the DPF regeneration prerequisite is satisfied.

For example, in the official gazette of Japanese Patent Laid-Open No. 2001-73748 of Japanese Patent Application, DPF regeneration control temporarily generates the designated condition in an exhaust gas by advancing or retarding the fuel injection timing in an engine provided with an electronic control fuel injection system such as a common rail. In this condition, the exhaust gas temperature is proper to oxidize, burn, and remove PM,

Moreover, after an exhaust gas temperature is raised to no less than the catalyst activation temperature of an oxidation catalyst by multistage retarded injection, a fuel such as light oil is added into an exhaust pipe through post-injection or in-exhaust-pipe injection. Then, by the combustion of the fuel with an oxidation catalyst, the exhaust gas temperature at the entrance of a filter is raised to the temperature to forcibly burn the accumulated PM or higher and PM is forcibly burned to be removed. A DPF is regenerated by this process of removing PM. The multistage retarded injection is an injection method capable of greatly retarding the main injection timing by retarding an injection timing and performing multistage injection of a small injection quantity before the main injection.

However, in the case of the DPF regeneration method according to the forcible burning of PM, an exhaust gas temperature can be raised by a significant retarded injection in the use of an electronic control fuel injection system such as a common rail. Therefore, the greater quantity of fuel is burned in an expansion stroke in which the pressure in the cylinder is extremely low.

In the case of the above combustion, flames can propagate only to a portion of a comparatively high air-fuel ratio nearby the center of spray. Therefore, the lean air-fuel mixture part in which the fuel spread in wide space of the cylinder can not be burned. Accordingly most sprayed fuel is discharged into an exhaust pipe. The discharged fuel can cause the generation of extremely large white fumes. Moreover, because the fuel cannot be burned, it is impossible efficiently to raise the temperature of the exhaust gas.

Furthermore, if this combustion continues, it means high-concentration HC has been present in the exhaust gas since the exhaust gas temperature was not more than the catalyst activation temperature of an oxidation catalyst. Therefore, when the exhaust gas temperature raises to activate the oxidation catalyst and an oxidation activation of HC occurs, the HC accumulated in the catalyst rapidly burns. Consequently, an abnormal high-temperature state occurs and causes a deterioration of the catalyst and a melt down. Moreover, because the exhaust gas heated to become high temperature by the rapid combustion flows into the DPF, the PM in the DPF starts runaway combustion and the melt down of the DPF may also occur.

A diesel engine with one of these continuous regeneration DPFs is often provided with a glow plug (preheating plug or heating plug) which is raised to a high temperature by supply of electric power. The diesel engine spontaneously ignites an air-fuel mixture by compressing the air-fuel mixture under high pressure. However, in a period when the outside air temperature is low, in such as winter, it is difficult to ignite spontaneously and it results in a difficulty of the engine starting, because the temperature of the air-fuel mixture also lowers. Therefore, the inside of a cylinder, particularly a combustion chamber is preheated by the glow plug only at the engine starting. Thereby, at the engine starting the fuel is easily ignited spontaneously. Then, when the engine has started and warmed up, preheating by the glow plug comes to an end.

### BRIEF SUMMARY OF THE INVENTION

The present invention is made to solve the above problems by using a glow plug and its object is to provide an exhaust gas purifying system capable of preventing the generation of white fumes and misfire, capable of substantially raising an exhaust gas temperature efficiently, and capable of preventing the generation of abnormally high temperature, deterioration of the catalyst, and the melt down in the catalyst and DPF, when the exhaust gas raising operation is performed for regenerating the continuous regeneration type DPF.

The exhaust gas purifying system for achieving the above object having a continuous regeneration DPF (diesel particulate filter) installed in the exhaust passage of a diesel engine provided with a glow plug and regeneration control means for regenerating the continuous regeneration DPF, is constituted such that the regeneration control means performs retarded injection or post-injection in the control of fuel injection into a cylinder and heating the inside of the cylinder by the glow plug for regenerating the continuous regeneration DPF.

The continuous regeneration DPF is one of the followings; a continuous regeneration DPF in which the filter is provided with an oxidation catalyst, a continuous regeneration DPF in which a converter with an oxidation catalyst is installed at the upstream side of the filter, and a continuous regeneration DPF in which the filter is provided with the catalyst and an oxidation catalyst is installed at the upstream side of the filter.

According to the exhaust gas purifying system of the present invention, heating by a glow plug used at a diesel engine starting is simultaneously used for a retarded injection or a post-injection in the exhaust gas temperature raising control for regenerating a continuous regeneration DPF. Simultaneous use of the heating by the glow plug makes it possible to further retard the misfire limit of an injection timing at which fuel is initially injected. Moreover, it is possible to make an initial generating flame large by reinforcing a fuel injection quantity. Furthermore, it is possible to increase a retard quantity because each misfire limit of a pilot injection and a main injection can be increased. Because of the substantial retard, even if the fuel injection quantity is increased, a torque is not influenced. Therefore, it is possible to increase the size of a flame such as an initial flame because the fuel injection quantity can be increased, and a stable combustion can be achieved.

Therefore, it is possible to generate a secure main combustion flame by performing the main injection having a large combustion flame by the significant retarded injection. Therefore, it is possible to sufficiency propagate a flame to a lean air-fuel mixture and thus to prevent the generation of white fumes or a misfire. Moreover, it is possible to efficiently and significantly raise the exhaust gas temperature.

Furthermore, because high-concentration HC doesn't exist in the exhaust gas since the time when the exhaust gas temperature was equal to the activation temperature of an oxidation catalyst or lower, the oxidation catalyst or HC accumulated in a filter doesn't rapidly burn. Therefore, it is also possible to prevent deterioration or melt down of a catalyst due to the rise of the exhaust gas temperature by the rapid burning.

As a result, the forcible burning of PM and the regeneration of DPF can be performed without the generation of extreme white fumes and with a small quantity of fuel required for temperature raising even under an engine operating condition in an idling or low-load, in which the forcible burning of PM and the regeneration of DPF was not possible hitherto because the exhaust gas temperature is insufficient to burn PM. Therefore, it is possible to prevent a discharge pressure from rising, to improve the fuel efficiency and to eliminate a trouble such as engine stall due to a high discharge pressure because the burning of PM and the regeneration of DPF can be performed anytime.

Consequently, it is possible to prevent the trouble such as melt down of filter. The trouble has occurred by runaway-burning of the excessively accumulated PM which is excessively accumulated due to the inability to regenerate DPF. Moreover, because a complex control or system having two exhaust systems for regeneration is unnecessary, it is possible to provide a high-reliability exhaust gas purifying system at low cost.

### BRIEF DESCRIPTION OF THE DRAWINGS

FIG. 1 is a system block diagram of an exhaust gas purifying system of an embodiment of the present invention;
FIG. 2 is an illustration showing a configuration of the engine portion of an exhaust gas purifying system of the present invention;
FIG. 3 is an illustration showing an example of multistage injection in the regeneration control of the present invention;
FIG. 4 is an illustration showing an example of raising an exhaust gas temperature by multistage injection of the present invention;
FIG. 5 is an illustration showing a comparative example of raising an exhaust gas temperature by multistage injection of the prior art;
FIG. 6 is a system block diagram showing an exhaust gas purifying system of the prior art;
FIG. 7 is a system block diagram showing another exhaust gas purifying system of the prior art; and
FIG. 8 is a system block diagram showing still another exhaust gas purifying system of the prior art.

### DETAILED DESCRIPTION OF THE INVENTION

An exhaust gas purifying system of an embodiment of the present invention is described below by using an exhaust gas purifying system provided with a continuous regeneration DPF (Diesel Particulate Filter) constituted by combining an oxidation catalyst (DOC) with a catalyst-provided filter (CSF) as an example, referring to the accompanying drawings.

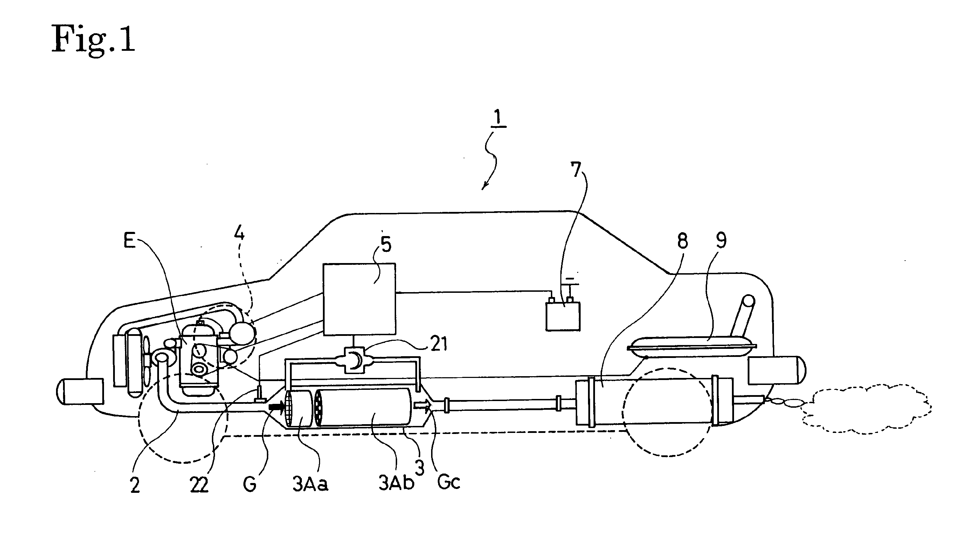

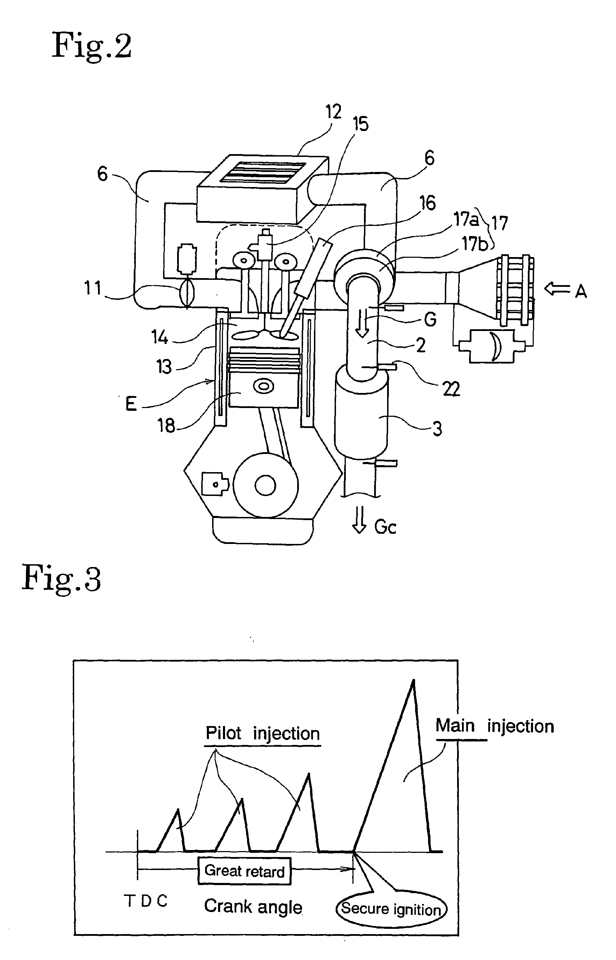

FIG. 1 and FIG. 2 show a configuration of the exhaust gas purifying system 1 of this embodiment. In the case of the exhaust gas purifying system 1, a continuous regeneration DPF 3 is installed in an exhaust passage 2 connected to the exhaust manifold 11 of a diesel engine E. The continuous regeneration DPF 3 is provided with oxidation catalyst 3Aa at the upstream side and a catalyst-provided filter 3Ab at the downstream side.

The oxidation catalyst 3Aa is formed such that an oxidation catalyst such as platinum (Pt) is carried on a carrier such as a porous-ceramic honeycomb structure carrier. Moreover, the catalyst-provided filter 3Ab is formed such that a monolith-honeycomb wall-flow-type filter is constituted by alternately sealing the entrance and the exit of a porous ceramic honeycomb channel. A catalyst such as platinum or cerium oxide is carried on the portion of the filter. In the catalyst-provided filter 3Ab, the PM (particulate matter) in exhaust gas G is trapped on the porous ceramic walls.

A differential pressure sensor 21 is then arranged in a conducting tube connected to the upstream side and the downstream side of the continuous regeneration DPF system 3 in order to estimate the quantity of the PM accumulated in the catalyst-provided filter 3Ab. Moreover, a DPF-entrance exhaust gas temperature sensor 22 is arranged at the upstream side of the continuous regeneration DPF 3 for the regeneration control of the catalyst-provided filter 3Ab.

Output values of these sensors are input to a controller (electronic control box; ECU: engine control unit) 5 for performing general control of operations of the engine E and regeneration control for the catalyst-provided filter 3Ab. Moreover, the fuel injection system and intake valve 16 of the engine E are controlled by control signals outputted from the controller 5.

The fuel injection system is connected to a common rail (not illustrated) for temporarily storing high-pressure fuel whose pressure is raised by a fuel pump (not illustrated). Moreover, the intake valve 16 is arranged in an intake passage 6 and adjusts the quantity of intake air supplied to an intake manifold. Furthermore, the controller 5 receives the information about the on/off state of a PTO switch, the on/off state of a neutral switch, on vehicle speed, cooling water temperature, engine speed and accelerator opening degree etc.

In the intake passage 6, the intake air A passes through a compressor 17a of a turbocharger 17 and intercooler 12, and then enters in the combustion chamber 14 of a cylinder 13 after the quantity of intake air A is adjusted by the intake valve 16.

A fuel injection valve 15 and glow plug 16 are provided with the combustion chamber 14. Fuel and intake air A are mixed by fuel injection from the fuel injection valve 15, and the fuel is spontaneously ignited by being compressed by a piston 18 to produce the exhaust gas G. The exhaust gas G enters in the continuous regeneration DPF 3 via a turbine 17b of the turbocharger 17 in the exhaust passage 2 and the gas G turns to the purified exhaust gas Gc. The purified exhaust gas Gc is discharged to atmospheric air via the muffler 8.

In the exhaust gas purifying system 1, the control for raising an exhaust gas temperature is performed, when the differential pressure of the differential pressure sensor 21 rises and the accumulated PM quantity in the catalyst-provided filter 3Ab of the continuous regeneration DPF system 3 exceeds a predetermined value at which the regeneration becomes necessary, and when the present temperature does not reach to the exhaust gas temperature necessary for PM oxidation and DPF regeneration due to an engine operating condition of idling or small load.

The control of raising the exhaust gas temperature somewhat depends on the type of the continuous regeneration DPF 3. However, in the fuel injection of the engine E, the exhaust gas temperature is raised by retard of the timing of main injection, performing post-injection or throttling intake air. By raising the exhaust gas temperature, a temperature and an environment become suitable for oxidation and removal of PM trapped in the continuous regeneration DPF 3, and the accumulated PM is oxidized and removed.

For example, in the case of the continuous regeneration DPF 3 provided with the oxidation catalyst 3Aa at the upstream side of the catalyst-provided filter 3Ab shown in FIG. 1, PM is burned at the following three stages to regenerate a DPF through the normal regeneration control.

At the first stage, the temperature of the oxidation catalyst 3Aa is raised to the activation temperature or higher. At the second stage, following after the first stage, the concentration of NOx in exhaust gas is increased by air systems such as an intake throttle, EGR or VNT, and the post-injection is performed. Thereby, a target temperature for the control is set approx. 500°C and the above state is maintained during the predetermined time. At the third stage, following after the second stage, the target temperature for the control is reset approx. 600°C and the above state is maintained during the another predetermined time while performing the same control as that at the second stage. Thus, PM is burned to regenerate a DPF.

In the case of the present invention, the inside of the cylinder 13 is heated by the glow plug 16 when performing retarded injection or post-injection in the control of fuel injection into the cylinder 13 for regenerating the continuous regeneration DPF 3.

As illustrated in FIG. 3, the retarded injection is performed by the multistage injection of pilot injection and main injection. Fuel is sprayed by multistage injection, and at the same time, the sprayed fuel is heated by the glow plug 16. FIG. 3 shows multistage injection in four stages such as pilot injection three times and main injection once. However, multistage injection in more stages is yet better.

Moreover, when the catalyst-provided filter 3Ab is regenerated by the controller 5, heating by the glow plug 16 is performed by supplying electric power to the glow plug 16 in a way similarly to preheating at the starting of an engine.

Then, as shown in FIG. 3, by using the heating by the glow plug 16 at the same time, it is possible to increase the misfire limit of the pilot injection at the first stage and realize the retarded injection of 20° CA (crank angle) or more after the top dead center. Because the retarded injection is performed in the middle of an expansion stroke, it does not result in generation of torque even if a fuel injection quantity is increased. Because the fuel injection quantity can be increased more than that in the case of no use of heating by the glow plug 16, it is possible to increase an initial injection quantity. Therefore, it is possible to increase an initial flame in size.

The second-stage injection is performed when the combustion of the fuel injected at the first stage is activated. Because the second-stage injection timing is the timing at which a piston descends further, the torque is not influenced even if injecting a yet greater quantity of fuel than in the case of the first-stage injection. Moreover, because the initial flame of the first-stage injection is large and the combustion is stable, it is possible to further increase a flame in size in accordance with the second-stage injection.

Then, the third-stage injection is performed when the combustion of the fuel injected at the second stage is activated. In the case of the third-stage injection, it is possible to further increase a flame in size because the torque is not generated even if further increasing an injection quantity.

The combustion flame in a cylinder is then continued up to the timing of the fourth-stage main injection, and the main injection with a large combustion flame is performed by greatly retarded injection to generate a secure combustion flame. Thereby, it is possible to propagate the flame up to a lean air-fuel mixture. Accordingly, it is possible to prevent white fumes and misfire from generating and to raise an exhaust gas temperature efficiently and substantially.

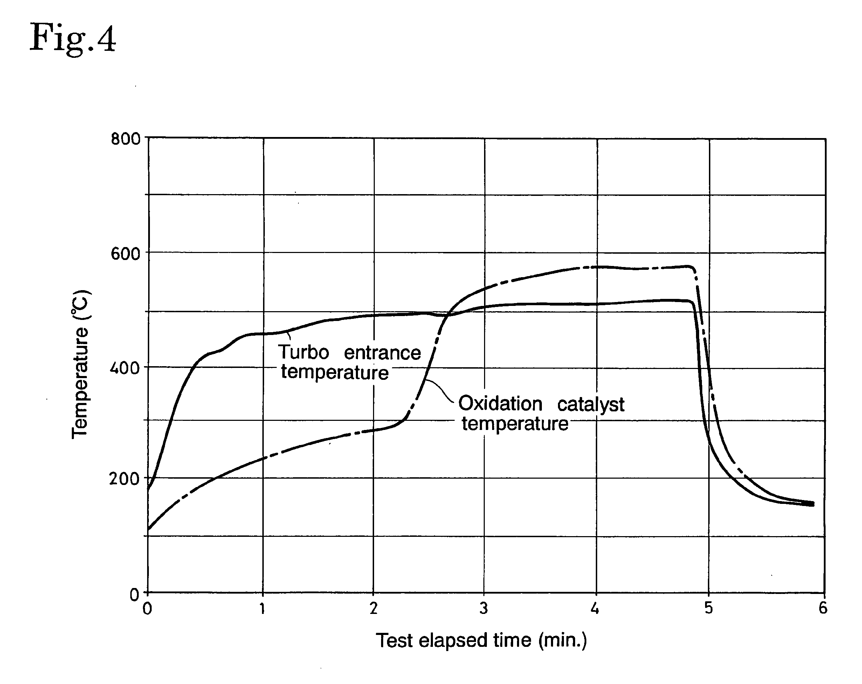

FIG. 4 shows the entrance temperature of the oxidation catalyst 3Aa of the continuous regeneration DPF 3. As the fuel injection is performed stepwise, the entrance temperature also rises stepwise.

Moreover, by simultaneously using the heating by the glow plug 16 also for post-injection performed after main injection, it is possible to increase the misfire limit and realize combustion at a large retard. Therefore, it is possible efficiently to raise an exhaust gas temperature without increasing torque.

The above description is made in respect of the continuous regeneration DPF 3 provided with the catalyst-provided filter 3Ab and the oxidation catalyst 3Aa at the upstream side of the catalyst-provided filter 3Ab. However, in addition to the continuous regeneration DPF 3, it is also possible to apply the present invention to a continuous regeneration DPF provided with the catalyst-provided filter and a continuous regeneration DPF provided with a filter and an oxidation catalyst at the upstream side of it.

### Example

A test of the multistage injection accompanied by the heating by a glow plug as an example and a test of the multistage injection not accompanied by the heating by the glow plug as a comparative example were performed. And the results of these tests are studied. These tests were performed in accordance with multistage injection in three stages including pilot injection two times and main injection once.

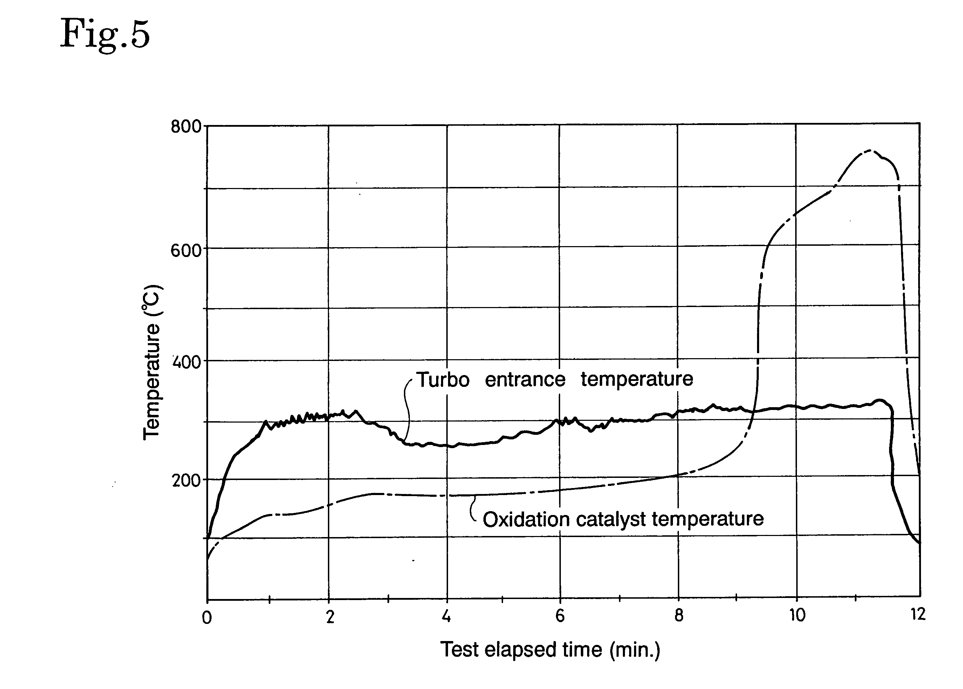

As the example of raising an exhaust gas temperature in accordance with the multistage injection accompanied by the heating by the glow plug, FIG. 4 shows the multistage injection with the heating by the glow plug under the idling in which an engine speed is 850 rpm. Moreover, FIG. 5 shows a comparative example of raising an exhaust gas temperature without the heating by a glow plug.

From FIG. 4 and FIG. 5, it is found that the turbo-entrance exhaust gas temperature which is an exhaust gas temperature immediately after an engine rises substantially and reaches to approx. 500°C in the case of the example, while the exhaust gas temperature rises up to approx. 300°C in the case of the comparative example, and it is moreover found that temperature rise speed in the case of the example is increased more than that in the case of the comparative example.

## Claims

1. An exhaust gas purifying system having a continuous regeneration diesel particulate filter installed in the exhaust passage of a diesel engine provided with a glow plug and a regeneration control means for regenerating said continuous regeneration diesel particulate filter, **characterized in that** said regeneration control means performs retarded injection or post-injection in the control of fuel injection into a cylinder and heating the inside of said cylinder by said glow plug for regenerating said continuous regeneration diesel particulate filter.
